# EUROPEAN PATENT SPECIFICATION

(11) **EP 4 443 361 B1**
(45) Date of publication and mention of the grant of the patent: **01.07.2026**
(21) Application number: 24168103.0
(22) Date of filing: 02.04.2024
(51) Int. Cl.: G06Q 10/107, G06F 16/215

(54) **EMAIL MANAGEMENT SYSTEM**
EMAIL-VERWALTUNGSSYSTEM
SYSTÈME DE GESTION DE COURRIER ÉLECTRONIQUE

(30) Priority: 03.04.2023 GB 202304939
(43) Date of publication of application: 09.10.2024
(73) Proprietor: Klick-Tipp Limited, London W6 7NJ (GB)
(72) Inventor: Wolosz, Mario, London W6 7NJ (GB); Klapper, Edmund Ernst, London W6 7NJ (GB)
(74) Representative: Optimus Patents Limited

(56) References cited:
- EP-B1- 3 596 643
- US-A1- 2011 125 770
- US-A1- 2015 205 842
- US-A1- 2023 098 926

## Description

### Field of the Invention:

The present invention relates to the field of electronic communications management and specifically to a method for enhancing email deliverability and user engagement.

### Background of the Invention:

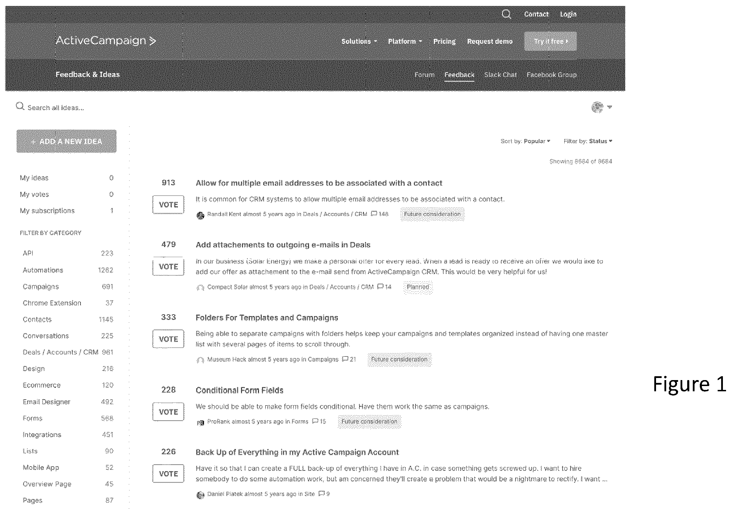

In the realm of email marketing and electronic communication, a common issue faced by organizations is the management of multiple different email addresses owned by single users. This leads to inefficiencies such as message redundancy, increased potential for spam labeling, and negative impacts on customer engagement metrics. Traditional methods of deduplication of email contacts are often manual and error-prone, relying on incomplete data sets and lacking the capability to adapt to the dynamic nature of email address use. Figure 1 shows an example user interface from an existing user interface, that may be accessed via https://ideas.activecampaion.com/?sort=popular , for example. In the previous system, results are stored in the database and are made available to the user if required. The immediate check of similarities for new email addresses is thus not possible because historical values from the database are always used.

EP3596643 describes a method and system for automatic user profile generation and authentication. The system generates a user profile based on usage and user details, and uses previously generated user profiles to determine an active user profile. US2011/0125770 describes a method and apparatus for facilitating identity resolution between multiple identity profiles. US2023/0098926 describes a method for data unification for data records that comprise a plurality of different data fields.

Artificial Intelligence (Al) refers to the development of computer systems that can perform tasks that typically require human intelligence. These tasks include understanding natural language, recognizing patterns, solving problems, and learning from experience.

Al systems can be designed to perform specific tasks, such as playing chess or recognizing faces in images, or they can be more general-purpose, like virtual assistants such as Siri or Alexa.

There are different approaches to Al, including:
Symbolic Al: This approach involves using predefined rules and symbols to represent knowledge and solve problems.

Machine Learning: This approach involves developing algorithms that allow computers to learn from data and make predictions or decisions without being explicitly programmed for each task.

Deep Learning: Deep learning is a subset of machine learning that uses artificial neural networks with many layers (hence the term "deep") to learn from large amounts of data.

AI has applications in various fields, including healthcare, finance, transportation, and entertainment. It's shaping the future of technology and how we interact with machines and each other.

Large Language Models (LLMs) are a specific type of Al model designed to understand and generate human language. These models are trained on vast amounts of text data and use sophisticated algorithms to learn the patterns and structures of language.

LLMs can perform various language-related tasks, including:
Text generation: They can generate human-like text based on a given prompt or context.

Language translation: They can translate text from one language to another.

Text summarization: They can condense long passages of text into shorter summaries.

Question answering: They can answer questions posed in natural language.

GPT-3 (Generative Pre-trained Transformer 3) is an example of a large language model developed by OpenAl. It has been trained on a diverse range of internet text and can perform a wide range of language tasks.

LLMs have many practical applications, such as improving chatbots, aiding in content creation, assisting in language translation, and even helping researchers analyze and summarize large volumes of text data.

AI encompasses a broad field of computer science focused on developing systems that can perform tasks requiring human-like intelligence, while Large Language Models are a specific type of Al model specialized in understanding and generating human language.

### Summary of Invention:

According to an embodiment there is provided a computer implemented method for consolidating multiple electronic mail addresses for a user into a single user profile with a single preferred email address comprising the database collecting contact data comprising an email address for a user and additional user information data for the user and storing the collected data in a database; analyzing the collected contact data and additional user information data to identify multiple different email addresses associated with a single user; merging the identified multiple email addresses associated with the single user into a separate unified contact record for the single user; and updating the single user profile within the database to reflect the unified contact record.

Preferably, analyzing the collected contact data and additional user information data involves applying machine learning algorithms to determine the likelihood that multiple email addresses are associated with the same user based on patterns in the email contact data and the additional user information data.

In an embodiment, at least one of the collected contact data and additional user information data are analysed using Machine Learning or Artificial Intelligence to identify different email addresses for the same user .

Further preferably, the machine learning techniques comprise at least one of pattern recognition and matching, Natural language processing, Supervised learning, unsupervised learning, fuzzy matching, probabilistic learning, deterministic linking, behavioural analysis using deep learning.

In an embodiment, the additional user information data comprises one of more of: subscription information, email and SMS (short message service) information, publicly available data, social media data, data related to electronic transactions, data related to customer service interactions, response data including IP (internet protocol) AWS addresses and geolocation information.

Preferably, historical information is analysed to find similarities in the contact data for a user. In an embodiment, the historical information comprises one of more of location information and contextual information about a user. Further preferably, wherein the historical information is analysed using Natural Language Processing.

In an embodiment, the contact data are stored in a SQL database. Preferably, the contact data also comprises at least one of postal address and mobile telephone number, also stored in the SQL database.

Further preferably, the additional subject information is stored in a NoSQL database.

In an embodiment, when new contact data and additional subject information data is added to the database, and automatic real time trigger is provided so that the new contact data and additional subject information data is analysed immediately after being added.

Preferably, the method further comprising a scheduled trigger to periodically scan at least part of the database at a predefined interval to check duplicate detection and merging is consistently applied to all data in the database. Preferably, the predefined interval is between 12-24 hours.

In an embodiment, the method further comprising a user activated trigger, for a user to indicate that two or more email contacts may relate to the same subject and activate the analysis step.

Preferably, the merging step includes the verification of data accuracy and the removal of redundant information to create a high-fidelity user profile.

In an embodiment, the merging module identifies groups of contacts that are at least one of: duplicates or closely related, and creates a relational link between the members of the group in the database. Preferably, the merging module creates the unified record information by attaching a unified contact ID to each contact that is associated with the single user.

Further preferably, the original contact information that created the unified contact are maintained separately from, and in addition to the unified contact information.

In a further embodiment there is provided a system for consolidating multiple electronic mail addresses for a user into a single user profile with a single preferred email address comprising: a data collection module for collecting contact data comprising an email address for a subject and additional subject information data for the subject and storing the collected data in a database; an analysis module for analyzing the collected contact data and additional subject information data using Machine Learning to identify multiple different email addresses associated with a single user; a merging module for Merging the identified multiple email addresses associated with the single user into a separate unified contact record for the single user; and a user interface for managing a deduplication process carried out by the above modules.

Preferably, the user interface comprises: a central control dashboard; review tools for manually merging contacts; and a review tool for manually identifying duplicates in the database.

The technology as described addresses the challenges of the prior art by applying artificial intelligence algorithms to accurately consolidate multiple contacts for individual users into singular comprehensive profiles, thereby improving the efficacy of communication strategies.

The invention provides a system and method for the consolidation of contact information to create a unified customer profile. The method as described leverages artificial intelligence and machine learning to analyze contact data, identify multiple email addresses associated with a single user, and merge them into an enriched contact dataset. The method as described provides an Adaptive Multi Email Address User Profile Manager. This process, is preferably an automated process and reduces the likelihood of sending duplicate emails to the same recipient, thereby minimizing the potential for spam complaints and unsubscriptions. By ensuring higher deliverability and engagement rates, the method as described offers significant improvements over conventional email marketing approaches. The system's ability to provide updated and accurate user information forms the basis for more personalized and effective communication strategies.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Figure 1 shows an example user interface of a prior art system;
Figure 2 shows the components of an example embodiment of the system;
Figure 3 shows a data collection module according to an example embodiment;
Figure 4 shows a flow chart of the steps for data collection and analysis according to an embodiment;
Figure 5 shows an example flow chart of how contact details are merged;
Figure 6(a) shows an example of steps linking contacts to contact details, and behaviour details;
Figure 6(b) shows linkages between the steps of figure 6(a);
Figure 7 shows the steps for an elastic search of the database;
Figure 8 shows a graph of processing times for a system trigger;
Figure 9 shows a graph of processing times for a system trigger at a later date than the graph of figure 8.

### Detailed Description:

The method as described below provides a novel and inventive solution to the problem of email redundancy by identifying multiple different email addresses belonging to the same user, by using an Adaptive Multi Email Address User Profile Manager. The system merges such redundant contacts into a single enriched data profile, ensuring that individual users receive only one copy of an email communication, thereby reducing spam complaints and unsubscribe rates while improving open and purchase rates for senders.

As described, an embodiment provides a computer implemented method for consolidating multiple electronic mail addresses for a user into a single user profile with a single preferred email address comprising the steps of: collecting contact data comprising an email address for a user and additional user information data for the user and storing the collected data in a database; analyzing the collected contact data and additional user information data to identify multiple different email addresses associated with a single user; merging the identified multiple email addresses associated with the single user into a separate unified contact record for the single user; and updating the single user profile within the database to reflect the unified contact record.

System 100 for email merging is described in detail below to illustrate the operation and technical makeup of the invention.

As described, a preferred embodiment provides a system for consolidating multiple electronic mail addresses for a user into a single user profile with a single preferred email address comprising: a data collection module for collecting contact data comprising an email address for a subject and additional subject information data for the subject and storing the collected data in a database; an analysis module for analyzing the collected contact data and additional subject information data using Machine Learning to identify multiple different email addresses associated with a single user; a merging module for Merging the identified multiple email addresses associated with the single user into a separate unified contact record for the single user; and a user interface for managing a deduplication process carried out by the above modules.

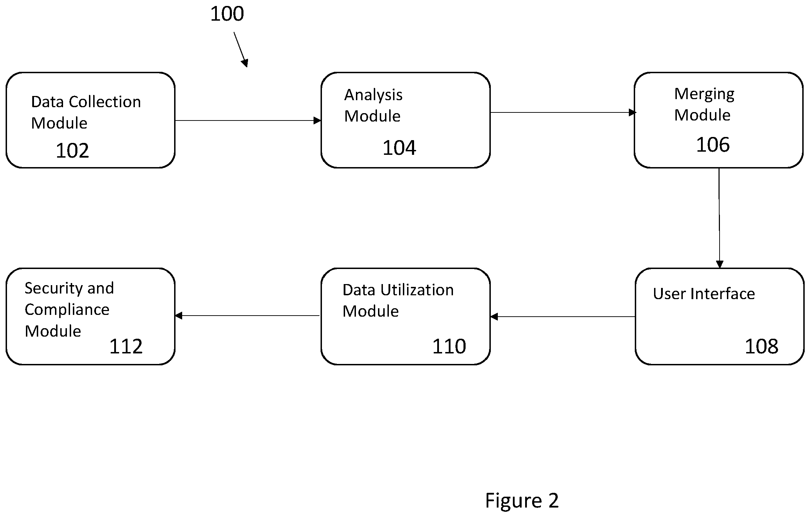

Figure 2 is an example showing various components of system 100. The system 100 comprises several core components including:
**Data Collection Module 102:** This module 102 collects email addresses and associated data from various sources and inputs.
**Analysis Module 104:** Utilizing Al algorithms, this module 104 analyzes the collected data to detect different email addresses that correspond to the same individual.
**Merging Module 106:** This component 106 merges duplicate contact records into a single enriched profile per user, based on the analysis.
**User Interface (UI) 108:** The UI 108 allows users to manage the deduplication process, review suggestions for data merging, and confirm changes to contact datasets.
**Data Utilization Module 110:** Post-merging, the enriched data can be used to optimize email campaign strategies, improving overall communication efficiency.
**Security and Compliance Module 112:** Ensures that all data handling within the different modules adheres to relevant privacy laws and regulations.

Each individual module of system 100 is described below with respect to its functionality, interrelation with other modules, and contribution to the overall effectiveness of the email management system.

### Data Collection Module 102

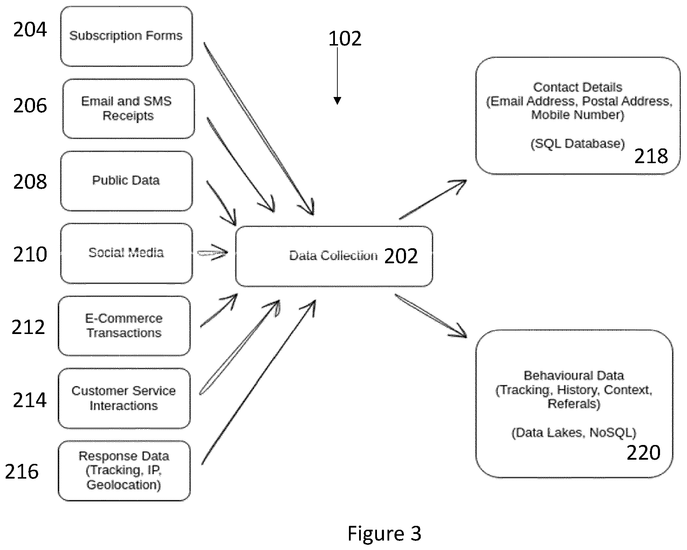

The Data Collection Module 102 is a comprehensive system designed to aggregate contact information and contextual data from a multitude of different sources. Preferably, the data collection module 102 collects contact data comprising an email address for a user and additional user information data for the user and storing the collected data in a database. This is shown in more detail in figure 3. This module 102 leverages advanced techniques to gather data, including, but not limited to, subscription forms 204, direct communications such as emails and SMS/WhatsApp messages 206, publicly available data 208, social network subscriptions 210, and response data from tracking pixels, IP addresses, and geo-location information 216. Preferably, the additional user information data comprises one of more of: subscription information, email and SMS information, publicly available data, social media data, data related to electronic transactions, data related to customer service interactions, response data including IP addresses and geolocation information. Additionally, the data collection module 102 is equipped to process data from e-commerce transactions 212, customer service interactions 214, public datasets, and social media analytics, thus offering a deep understanding of user behaviors and preferences.
- **Web Forms and Surveys:** Beyond basic subscription forms, detailed web forms and surveys can collect nuanced preferences and interests of users, this is processed at 204..
- **E-commerce Transactions:** Information from purchases or interactions on e-commerce platforms, including product preferences, purchase history, and transaction dates 212.
- **Customer Service Interactions:** Data derived from customer service platforms, including chat logs, support tickets, and feedback forms 214.
- **Public Datasets and Social Media Analytics:** Aggregating publicly available data 208 or utilizing analytics from social media platforms 210 to understand user behavior and interests.
- **Response Data 216:** Analyzing user engagement with previously sent emails or visited websites to collect co-incidence data and to refine future communications.

To accommodate the diverse nature and volume of data collected 202, the system and method as described utilizes a robust storage architecture preferably comprising a SQL database 218 for storing fundamental contact details such as email addresses, mobile telephone numbers and postal addresses. For contextual and behavioral data, another database is used, preferably this is an Elastic Search Database 220, offering efficient data retrieval for real-time analysis. The system is further enhanced with NoSQL databases for unstructured data, data lakes for raw data aggregation and cloud storage solutions for scalable data management. Preferably, additional user information is stored in an SQL database. In an embodiment, when new contact data and additional subject information data is added to the database, an automatic real time trigger is provided so that the new contact data and additional subject information data is analysed immediately after being added. Further preferably, the method may also comprise a scheduled trigger to periodically scan at least part of the database at a predefined interval to check duplicate detection and merging is consistently applied to all data in the database. In an embodiment, the predefined interval is between 12-24hours. In this way, the scanning is preferably at a time period when the system is less busy, for example at night time.
- **SQL Databases:** For structured data, such as email addresses or postal information.
- **NoSQL Databases:** For flexible storage of unstructured data, such as interaction logs or complex user profiles.
- **Data Lakes:** Aggregating large volumes of raw data in its native format, allowing for scalable storage and sophisticated analysis using Al algorithms.
- **Cloud Storage Solutions:** Utilizing cloud-based platforms for scalable, secure, and accessible data storage needs.

Data collection module 102, provides a foundation for the subsequent analysis, merging, and utilization of data performed by the other modules of the system. By intelligently consolidating detailed user profiles, the system as described significantly reduces the incidence of duplicate communications, fostering higher engagement rates and compliance with privacy regulations, thereby redefining the landscape of email marketing.

This detailed description encapsulates the innovation and technical specifications of the Data Collection Module 102 within the system, underscoring its significance in the overall system and its contribution to the state-of-the-art in email marketing solutions.

### Analysis Module

For the Analysis Module 104, its primary function is to analyze collected data from the data collection module 102, to detect different email addresses and associated data that correspond to the same individual, facilitating the identification of duplicate contact records. Preferably the analysis module analyzes the collected contact data and additional user information data to identify multiple different email addresses associated with a single user. This analysis module leverages 104 sophisticated Al algorithms and methods to achieve accurate and efficient deduplication.

One function of the analysis module 104 involves assessing two sets of contact data, each with unique email addresses, to ascertain the probability that both datasets pertain to the same individual. This challenge arises from the diverse and complex nature of contact information, which is typically gathered from various sources and marked by incompleteness and inconsistency. It's common for individuals to use multiple email addresses for distinct purposes, resulting in the appearance of separate contact records within a database for a single individual. Identifying the likelihood that these records, despite their apparent differences in email addresses, are related to the same individual demands a deep understanding of the data associated with the email address. The process goes beyond examining basic details, requiring an analysis of additional data points-such as customer names, postal addresses, phone numbers, and behavioral indicators. These elements can offer insights into the contact's true identity. The complexity of determining the likelihood of a match between datasets with differing email addresses underscores the problem space addressed by the Analysis Module 104. By leveraging Al and machine learning, it aims to reveal underlying connections within the data set and minimize the duplication of contact information. Preferably, the analysis module 104 analyzes the collected contact data and additional user information data by applying machine learning algorithms to determine the likelihood that multiple email addresses are associated with the same user based on patterns in the email contact data and the additional user information data. In an embodiment, at least one of the collected contact data and additional user information data are analysed using Machine Learning or Artificial Intelligence to identify different email addresses for the same user.

Preferably, the machine learning techniques comprise at least one of pattern recognition and matching, Natural language processing, Supervised learning, unsupervised learning, fuzzy matching, probabilistic learning, deterministic linking, behavioural analysis using deep learning. Below are examples of the Machine Learning and Artificial Intelligence methods and techniques that can be employed by the Analysis Module 104 based on the data types outlined in the Data Collection Module 102:

### Pattern Recognition and Matching with Al:

Al-driven pattern recognition algorithms excel in identifying common patterns and variations in email addresses and names, such as recognizing "john.doe@gmail.com" as equivalent to "johndoe@gmail.com." Machine learning models are trained on large datasets to understand various naming conventions, email formatting practices, and common typographical errors, enabling them to match different data entries that refer to the same individual accurately.

### Natural Language Processing (NLP) for Semantic Analysis and Entity Recognition:

Utilizing NLP, the system can perform semantic analysis of textual data from emails, SMS, and social media, identifying common themes or references that suggest the same individual. Entity recognition algorithms further help link personal identifiers like names and addresses across different datasets, even when presented in varied formats or contexts.

### Machine Learning Models for Supervised and Unsupervised Learning:

- **Supervised Learning:** Models are trained on labeled datasets to recognize patterns that indicate when different data points belong to the same individual, improving the system's ability to predict matches accurately.
- **Unsupervised Learning:** Through clustering techniques, the system can find natural groupings in the data, identifying potential matches based on similarities without needing pre-labeled examples. This method is particularly useful for discovering new or unexpected correlations in the data.

### Fuzzy Matching Enhanced by Al:

Al technologies augment fuzzy matching capabilities, enabling the system to recognize and reconcile non-exact matches with a high degree of accuracy. Machine learning models learn from inconsistencies and variations in data entries, allowing for the intelligent matching of records that traditional algorithms might miss due to minor discrepancies.

### Data Linkage Techniques Powered by Al:

- **Probabilistic Linkage with Al:** Advanced algorithms enhance the calculation of match probabilities, learning from the data to determine which attributes most effectively indicate identity matches, thereby improving the accuracy of linkage.
- **Deterministic Linkage Enhanced by Machine Learning:** Al can dynamically create and adjust linking rules based on data characteristics, enabling the system to effectively link data points even as datasets evolve.

**Behavioral Analysis Using Deep Learning:** 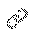

Deep learning models analyze user behavior patterns, such as engagement with emails and browsing habits, to identify unique behavioral signatures. These models can detect subtle behaviors that traditional methods might overlook, linking profiles based on dynamic interaction patterns alongside static data points.

Implementing these methods allows the Analysis Module 104 to accurately identify and group multiple contact records belonging to the same individual. This process is crucial for the subsequent merging of duplicate records into a single, enriched profile, ensuring the effectiveness of the system's deduplication efforts. By applying a combination of these techniques, the Analysis Module 104 can handle a wide range of data discrepancies and variations, significantly improving the accuracy of contact data consolidation.

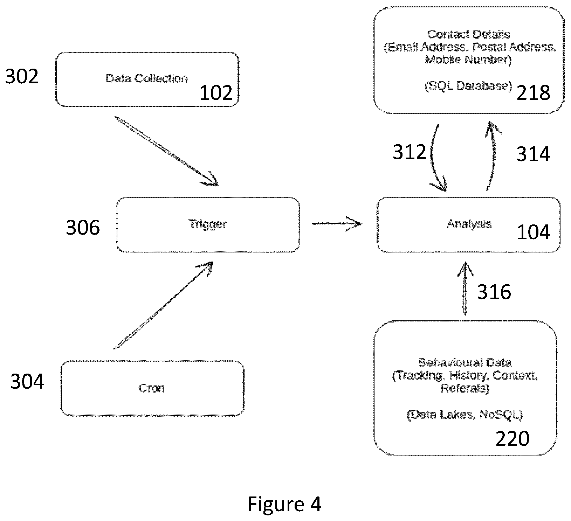

Figure 4 is an example flow chart of how data collected by the data collection module 102 is analyzed by the analysis module 104. Data is collected at 302 by data collection module 102.

### Trigger

The Analysis Module 104 in the system operates on a sophisticated trigger mechanism that initiates the analysis process to identify duplicate contact records in the database. This trigger-based approach ensures efficient resource utilization and timely deduplication of contact information, significantly enhancing the system's overall effectiveness. The analysis is primarily initiated by but not limited to the following three different types of triggers:

### Data Collection Module Trigger:

Whenever new data is added to the system 302, the Data Collection Module 102 sends a trigger 306 to the Analysis Module 104 to perform analysis 308. Preferably, this trigger is an automatic trigger. This trigger 306 acts as an immediate prompt that new or updated information in the databases 218, 220is available for analysis 308. The integration between the Data Collection 102 module and Analysis Module 104 is designed to be seamless, ensuring that the addition of new datasets-whether through subscription forms 204, email receipts 206, SMS/WhatsApp messages 206, social network subscriptions 210, e-commerce transactions 212, customer service interactions 214, or response data 216 - cues the Analysis Module 104 to begin its process, preferably this will be an automatic cue. This real-time triggering mechanism allows the system to continuously update and refine its contact records, maintaining an up-to-date and accurate database. The analysis module 104 provides information to SQL database 218 at step 314, and also receives information from the database 218 at 312. Data from database 220 is also provided to the analysis module 104 at step 316.

### Scheduled Analysis Trigger (Cron Jobs):

In addition to real-time data triggers, the system employs scheduled analysis triggers 304, commonly referred to as cron jobs. These scheduled triggers 304 are set to periodically scan the entire dataset at predefined intervals, ensuring that duplicate detection and merging processes are consistently applied to all data within the system, not just newly added information. This mechanism is particularly useful for identifying duplicates that may have been overlooked or have arisen due to recent data changes or integrations. The scheduled analysis helps maintain the integrity and cleanliness of the database over time, ensuring that the system's contact records remain consolidated and current. Preferably, a scheduled trigger will periodically scan at least part of the database at a predefined interval to check duplicate detection and merging is consistently applied to all data in the database.

### Customer-initiated Analysis Trigger:

This trigger 304 is activated by actions taken by the customer within the User Interface (UI) when they identify potential duplicates or related contacts in their dataset. By providing a mechanism for customers to flag contacts for review or to suggest that two or more contacts may be related, the system can directly leverage human insight alongside automated Al analysis. In an embodiment, a user activated trigger, for a user to indicate that two or more email contacts may relate to the same subject and activate the analysis step.

### Merging Module

Merging Module 106 within the system 100 plays a role in consolidating duplicate contact records into a single, enriched profile, enhancing the quality of the contact database while preserving the integrity of the original data. The merging module merges the identified multiple email addresses associated with the single user into a separate unified contact record for the single user. This module 106 operates with a sophisticated approach to ensure that the merging process is both effective and non-destructive. The following is a detailed breakdown of the functionality of the merging module 106: Preferably, the merging step includes the verification of data accuracy and the removal of redundant information to create a high-fidelity user profile. In an embodiment, the merging module identifies groups of contacts that are at least one of: duplicates or closely related and creates a relational link between the members of the group in the database. Preferably, the merging module creates unified record information by attaching a unified contact ID to each contact that is associated with the single user. In an embodiment, the original contact information that created the unified contact are maintained separately from, and in addition to the unified contact information.

### Non-destructive Relationship Creation:

- **Identifying Similar Datasets:** Utilizing the outcomes from the Analysis Module 104, the Merging Module 106 identifies pairs or groups of datasets (contacts) deemed to be duplicates or closely related.
- **Creating Relations:** For each identified pair or group, the module creates relational links (SQL relations) in the database. These links indicate that the datasets are similar, effectively "tagging" them for potential merging. This step is done without altering the original data, ensuring that if the process needs to be reversed or if the relational data is deleted, the original contact records remain untouched and fully intact.

### Non-destructive Data Merging:

- **Reference-based Merging:** When merging two contacts, module 106 does not directly amalgamate the contact data. Instead, it attaches references to the original data entries. This method ensures that while the contacts are viewed as a single entity within the system, the data belonging to the original contacts is preserved with distinct references (e.g., Reference A for Contact 1, Reference B for Contact 2).
- **Unified Contact ID:** Both original contacts are now accessible through a single contact ID, enabling seamless interaction with the consolidated profile. This unified ID facilitates ease of access and management within the system, both for existing and new automations or marketing workflows.

In a preferred embodiment the single user profile within the database is updated to reflect the unified contact record.

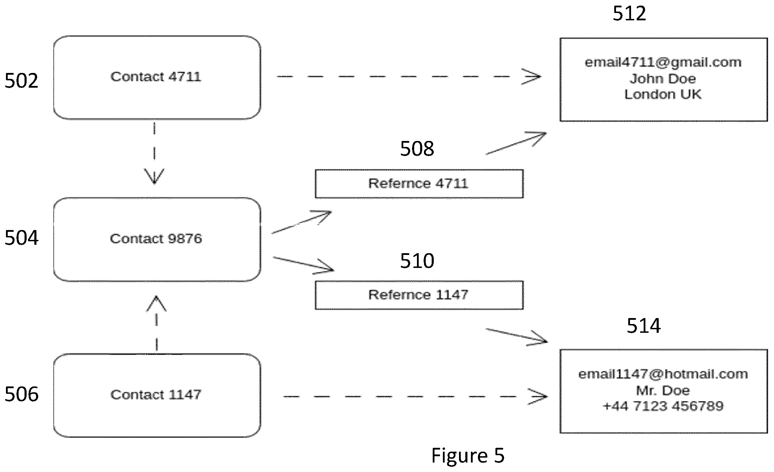

Figure 5 shows an example flow chart of how contact details are merged by the merging module 106 to provide a unified contact ID. At 502 contact 4711 is provided with details at 512. Similarly contact 1147 is provided at 506, with contact details as shown at 514. These are merged at 504 to generate contact 9876. This new contact has a link 508 to the reference for contact 4711, and the contact details for 4711, as well as a link 510 to the reference 510, and the contact details 514 for reference 1147.

### Enhanced Automation and Workflow Integration:

- **Continuity for Existing Automations:** Marketing workflows and automations associated with the original contacts continue to function without disruption. They utilize the specific references (A or B) to ensure that actions, such as personalized communications, remain relevant and targeted.
- **Decision Logic for New Automations:** For new marketing workflows, the system can intelligently decide which email address (from Contact A or B) to use based on criteria such as the best response rate, click-through rate, or lead value. This allows, for instance, for a newsletter to be sent only once to the preferred email address, optimizing engagement and efficiency.

### Implementation Highlights of this system:

- **Non-destructive Approach:** By preserving the original data for all contacts and utilizing references, the system maintains the flexibility to adapt or revert changes without data loss.
- **Optimized Engagement:** The ability to select the optimal contact details for communications ensures higher engagement rates and reduces redundancy in marketing efforts.
- **Data Integrity and Accessibility:** The unified contact ID, as shown in 504 of figure 5, and relational links ensure that the enriched contact profiles are easily accessible and manageable, enhancing the overall quality and usability of the contact database.
- **Distinguishing Factor:** The adoption of an abstract "contact ID" as the primary key, rather than email addresses, distinctly sets the system and method of this invention apart from traditional email marketing solutions, particularly those that segment audiences using lists of email addresses. This innovative approach allows for more sophisticated data management and audience segmentation, transcending the limitations imposed by conventional systems that rely solely on email addresses for identifying and organizing contacts. By facilitating a one-to-many relationship between the "contact ID" and various pieces of contact information, the method as described enables a level of personalization and efficiency unmatched by other solutions in the market, addressing one of the core challenges in managing duplicate contact information.

The innovative approach of the merging module 106 to data consolidation significantly contributes to the system's effectiveness, ensuring that email marketing strategies are both efficient and personalized. By maintaining the integrity of original data while streamlining the contact records, the method of this invention offers a sophisticated solution to the challenges of managing duplicate contact information.

### User Interface (UI)

The User Interface (UI) module 108 of the system is designed to provide an intuitive and efficient platform for users to manage the deduplication process, review suggestions for data merging, and confirm changes to their contact datasets. This module serves as the bridge between the system's sophisticated backend processes and the user, enabling direct interaction and oversight over the data consolidation efforts. Preferably, the user interface comprises: a central control dashboard; review tools for manually merging contacts; and a review tool for manually identifying duplicates in the database . Here's a detailed overview of its functionality and features:

### Key Features of the User Interface (UI) Module 108:

### 1. Dashboard Overview:

∘ A centralized dashboard offers a comprehensive view of the deduplication status, including the number of duplicate contactsdetected, pending actions, and recent merges. This allows users to quickly assess the state of their contact database at a glance.

### 2. Review and Approval of Merge Suggestions:

∘ The UI 108 presents users with Al-generated suggestions for merging duplicate contacts, including detailed comparisons of the contact records being considered for merging. Users can review these suggestions, examine the evidence supporting the proposed merges, and approve or reject the suggestions based on their assessment.

### 3. Manual Deduplication Tools:

∘ For instances where automated suggestions may not be available or sufficient, the UI provides tools for users to manually search for and identify duplicates within their contact database. This includes search filters, sorting options, and the ability to compare contacts side-by-side.

### 4. Non-destructive Editing and Reversion Options:

∘ Acknowledging the importance of data integrity, the UI enables non-destructive editing of contact records. Users can make changes or merge contacts with the assurance that original data can be preserved or restored if needed. This is facilitated through a version history and reversion options for each contact record.

### 5. Customization of Merge Criteria:

∘ Users have the ability to customize the criteria used for identifying duplicates, allowing them to adjust the sensitivity of the detection algorithms based on their specific needs. This customization includes setting preferences for which data points are prioritized in the merge decision process.

### 6. Integration with Marketing Workflows:

∘ The UI seamlessly integrates with existing marketing workflows and automations, allowing users to directly apply the outcomes of the deduplication process to their marketing campaigns. This includes updating contact lists, segmentations, and personalization settings based on the consolidated contact data.

### 7. Feedback and Reporting:

∘ Users can submit feedback on the deduplication process and merge suggestions directly through the UI. Additionally, the module offers detailed reporting tools for tracking the impact of deduplication on marketing performance metrics, helping users to understand the benefits of their data management efforts.

### 8. User Training and Support:

∘ To ensure users can effectively utilize the deduplication tools, the UI includes access to training resources, tutorials, and customer support. This ensures that users can quickly become proficient in managing their contact data and leveraging the full capabilities of the system.

The User Interface (UI) module of the is meticulously designed to empower users with the tools and insights needed to maintain a clean, accurate, and efficient contact database. By facilitating easy management of the deduplication process, offering customization options, and integrating with marketing workflows, the UI ensures that users can maximize the effectiveness of their email marketing strategies while maintaining control over their data.

### Data Utilization Module 110

The Data Utilization Module 110 plays a pivotal role in leveraging the enriched contact data resulting from the deduplication and merging processes to significantly enhance email marketing strategies. This module 110 utilizes advanced analytics and decision logic to optimize communication and improve overall efficiency. Key aspects of this module are explained in more detail below:

### Decision Logic for New Automations:

- **Intelligent Email Selection:** The module incorporates sophisticated algorithms to determine the most effective email address to use for communications with a unified contact profile, which could be from Contact A or B. This decision is based on a variety of factors, including response rate, click-through rate, and lead value, ensuring that marketing efforts are directed where they are most likely to engage the recipient and elicit a positive response.
- **Optimization of Engagement:** By sending a newsletter or any marketing communication only once to the selected email address, the system eliminates redundancy and potential annoyance to the recipient, thereby optimizing engagement rates and improving the efficiency of marketing campaigns.

### Enhanced Contact Data through Merged Behavior Analysis:

- **Comprehensive Behavioral Insights:** The merging process not only consolidates contact information but also combines behavioral data from the merged profiles. This aggregated behavioral data provides a more complete view of the contact's interactions, preferences, and engagement patterns, offering valuable insights that were not as apparent when the data was segmented.
- **Strategic Marketing Personalization:** With a richer dataset at its disposal, the Data Utilization Module enables more targeted and personalized marketing strategies. Marketers can tailor their campaigns based on a unified behavioral profile, enhancing relevance and personalization. This could involve segmenting audiences more accurately, personalizing content and offers to match the contact's demonstrated interests, and timing communications to align with when they are most likely to be receptive.
- **Data-Driven Decision Making:** The enriched contact data serves as a powerful resource for marketing decision-making. By analyzing combined behavioral patterns, marketers can identify trends, preferences, and potential areas for improvement in their strategies. This data-driven approach allows for the refinement of campaign tactics over time, ensuring that marketing efforts are both effective and efficient.

### Reduction of Spam Rate through Intelligent Email Consolidation:

- **Streamlined Communication:** By identifying Contact A and Contact B as the same individual and merging their records, the method as described significantly reduces the likelihood of sending multiple emails to what effectively is a single recipient. This consolidation ensures that each unique contact receives only one email per campaign or communication effort, directly addressing and mitigating the issue of email overload.
- **Enhanced Recipient Experience:** The reduction in email frequency contributes to a more positive recipient experience. When users receive fewer, but more relevant and carefully targeted emails, their perception of the brand improves. This reduction in perceived spam enhances the likelihood of engagement with the email content, as recipients are less inclined to ignore or unsubscribe due to feeling overwhelmed by excessive communication.
- **Optimal Email Address Utilization:** The system's ability to select the "best" email address for communication, based on metrics like response rate, click-through rate, or lead value, further refines the process. Not only does this approach reduce the total number of emails sent, but it also increases the chances that the communication will be well-received and acted upon, leveraging the most effective channel for each contact.
- **Improvement in Campaign Metrics:** The strategic reduction of email volume, paired with targeted delivery, can lead to improved campaign metrics. Lower spam rates translate to higher deliverability, open rates, and click-through rates, as the emails that are sent are more likely to be relevant and welcomed by the recipients. This refinement in approach supports a more sustainable and respectful email marketing strategy, prioritizing quality and relevance over quantity.

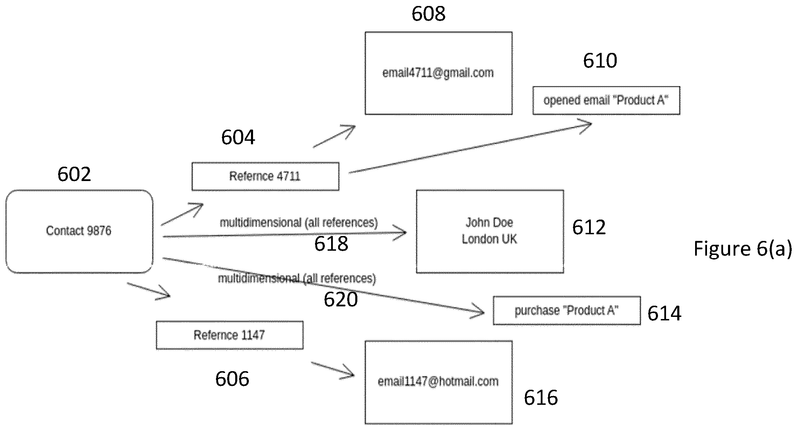

Figure 6(a) shows an example of how a contact is linked and tracked in the database and method according to an embodiment. At 602 details for a contact labelled 9876 are provided. At step 6044 this is linked to reference 4711 within the database 218. The email contact for the reference is provided at 608. At 610, behaviour data (opened an email) from database 220, for the contact is shown. An alternative reference for the contact is shown at 606, this has the alternative email address shown at 616, again from database 218. At 618 all the references are used to determine the postal address associated with the contact in 602. At 620 it is shown that the contact 620 purchased a product associated with the email at 610.

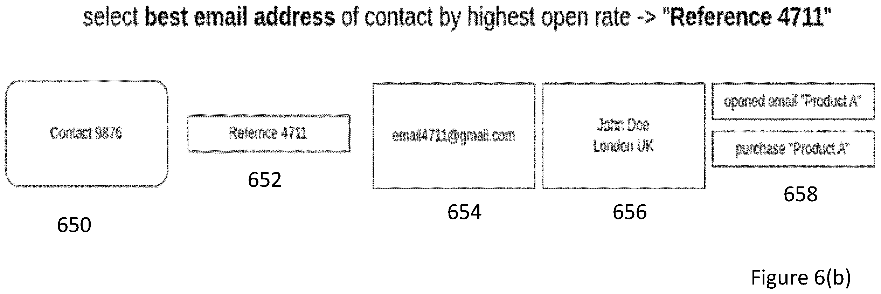

Figure 6(b) shows how the email address of the contact with the highest open rate is selected. At 650 contact 9876 is selected, this is given reference 4711 in the database 218 at step 652, this corresponds to the email shown at 654, and the postal address shown at 656. At 658 social behaviour details for the contact, related to email opening and purchasing decisions are shown at 658.

Overall, the Data Utilization Module110 is integral to translating the consolidated and enriched contact data into actionable insights and strategies for email marketing. By applying decision logic to automate email address selection and by leveraging merged behavioral data for personalization, the system of this invention offers a sophisticated solution for optimizing marketing communications, thereby enhancing engagement and driving better campaign outcomes.

### Security and Compliance Module

The Security and Compliance Module 112 within the system and method as described for email management ensures that the platform not only adheres to stringent data handling protocols and privacy regulations but also upholds principles of transparency, consent, and non-destructive data management. This module is pivotal in maintaining the trust and integrity of the system by incorporating customer approvals and transparent data merging processes.

### Customer Consent and Approval:

- **Customer-initiated Consent for Merging:** Central to operation of the system of Figure 1 is the requirement for explicit customer approval before merging any datasets. The system does not automatically merge data identified as belonging to the same individual. Instead, it seeks confirmation from the customer, ensuring that any action taken on their data is fully transparent and consented to. This approach respects user autonomy and aligns with stringent privacy standards that require explicit consent for data processing activities.
- **Transparent Merging Process:** The merging of contact records within the database is conducted in a manner that is both transparent and non-destructive. Customers are provided with detailed information about what the merge entails, including how the data from two datasets (Contact A and B) will be consolidated. This transparency ensures that customers are fully informed and can trust the integrity of the process.

### Non-destructive Data Handling:

- **Reversible Merging:** In keeping with the non-destructive approach, all merged data within the database maintains a link to its original records. This means that the merge is fully reversible, and original datasets can be restored if needed. The system preserves the integrity of the original data, ensuring that the merging process is not only transparent but also reproducible. Customers can have confidence that their data is handled with care and that any modifications do not compromise the original information.
- **Audit Trails and Reproducibility:** the system of figure 1 maintains comprehensive audit trails for all data merging activities. This record- keeping ensures that every action taken on the data is documented, providing a transparent and reproducible process. Customers can review the history and rationale behind data merges, reinforcing the system's commitment to openness and accountability.

### Reinforced Data Security and Compliance:

- **Robust Security Measures with User Consent:** The module implements state-of-the-art encryption, access controls, and regular security audits, all while prioritizing user consent and transparency in data merging. These practices ensure that the method and system of this application not only protects data from unauthorized access but also respects user preferences and legal requirements.
- **Alignment with Privacy Laws:** By requiring customer approval for data merges and maintaining a non-destructive approach to data handling, this invention ensures compliance with global privacy regulations like the GDPR and CCPA. These procedures support principles such as data minimization, purpose limitation, and user rights, reinforcing the system's legal and ethical standing.

The Security and Compliance Module 112 is integral for ethical data practices, prioritizing customer consent, transparency, and the integrity of data handling processes. This approach builds trust with users, ensuring that their data is not only secure but also managed in a manner that respects their autonomy and complies with international privacy standards.

As described above with reference to the analysis module, contact data are stored in a database 218, preferably , an SQL database. However, this database typically has no function to search for letters that are close to each other in an email address. It is also not possible to reformat and split the email address at a separator such as a dot, hyphen, underscore, or "@". Only with the transfer to a new Elasticsearch index and the use of the other technologies described in this report was it possible to develop this new function.

As an additional methodology for identifying duplicate entries, a similarity checks of the local part of email addresses and the Gmail alias with "+" was introduced. The expected performance was critical for the usability of the solution to be developed. Therefore, the following solutions were implemented on a test system and tested with 50,000 test addresses for the expected performance.

### Elasticsearch instance

Because no Elasticsearch cluster was available yet, a local instance of Elasticsearch was created in a Docker container. Elasticsearch was used with a single-node cluster because running a multi-node cluster on a test system can generate too high a load and thus hinder further work. For the tasks at hand, it was irrelevant how many nodes are present in a cluster.

### Index

When constructing the index, it was assumed that both the complete email address and the local parts would be stored in it because some check algorithms can refer only to the local part whilst others require the complete email address.

Searching in Elasticsearch is highly dependent on the configured analyser. For test purposes, we created three fields with different possible analysers for the local part of the email. This made it possible to test the Elasticsearch queries with different analysers and compare results. After this, test data sets were created via bulk update.

### Implementation of requirements

The following steps may be performed with the analysis module previously described, using pattern recognition and matching with Al.

### Same local part:

In this example, the subject name is the same, and is presented as exactly the same text, with no modifiers, but the email provider, after the @ symbol is not the same. e.g. klausguenther@test.de, klausguenther@example.com, klausguenther@me.de

The probability that these email addresses are for the same individual is high.

### Similar local part:

In this case, the letters for the name are the same, but they may be presented with modifiers such as a full stop, a dash between the first and second names, or with no modifier so the first and second names run together as one word. Possible examples are: klausguenther@test.de, klaus.guenther@example.com, klaus-guenther@me.de, k.guenther, guenther.k

Probability that these email addresses are for the same individual is medium.
**Gmail aliases with** "+":
   for email addresses with @gmail.* or @googlemail.* domain containing a "+", only the part before the plus was checked, and only 100% matches were output as duplicates.
   e.g. klausguenther+1@gmail.com, klausguenther+2@gmail.com, klausguenther@gmail.com
   Probability that these email addresses are for the same individual is: exact.
**Other aliases with** "+":
   for email addresses containing a "+", only the part before the plus was checked, and only 100% matches were output as duplicates.
   e.g. klausguenther+1@test.com, klausguenther+2@test.com, klausguenther@test.com
   Probability that these email addresses are for the same individual is very high

The contact information, comprising at least all email address of a contact were included in the similarity check regardless of which reference they are assigned to and whether they are stored as default or optional. In "real operation", when an email address is subscribed to a list, it is checked whether there is another subscriber with a similar email address in the same user account, and a duplicate event is generated accordingly. Preferably, historical information is analysed to find similarities in the contact data for a user. In an embodiment, the historical information comprises one of more of location information and contextual information about a user. In a further embodiment, wherein the historical information is analysed using Natural Language Processing.

For the equality check, the use of a term query was obvious. For example, the email address with the exact local part "digitalresult" should be searched for. It was expected that the email addresses "digitalresult@gmail.com" and "digitalresult@hotmail.com" would be found. First, the field was queried with the keyword analyser. The response was as expected.

The situation was different when searching in the field with a Standard or Simple Analyser. Here, one more result than expected was delivered.

The analysis module may also perform fuzzy matching enhanced by Al, as described below.

### Fuzzy queries

The following options were tested:
- Regex query
- Prefix queries
- Use of canonical values
- Wild card query
- Fuzzy query

Using fuzzy queries turned out to be the easiest option. Elasticsearch calculates the Levenshtein distance between the search term and the tokens and returns only data sets with hits for which the Levenshtein distance does not exceed the configured maximum. The lower the distance, the better the score of the hit. With fuzzy queries, you can easily recognise similar strings. In addition, the same strings can be recognised so that the same and similar local parts can be retrieved with a query. In some cases, the Levenshtein metric is replaced by Al, which has a similar methodology to Levenshtein, but uses a self optimizing metric.

The runtime of the data processing was determined as it was unclear which connector would be able to process the requests fast enough. Tests were carried out over a period of six weeks with the two previously selected Confluent Cloud Connectors. A different "plug-in" was used in each case. There are two Confluent Cloud Connectors running - each with a different "plug-in". One runs a Debezium plug-in that connects to our mysq-data2 node and replicates all changes for specific tables to the Kafka queues running in the Confluent cloud.

The other connector runs an Elasticsearch plug-in and transfers changes from configured Kafka queues to Elasticsearch.

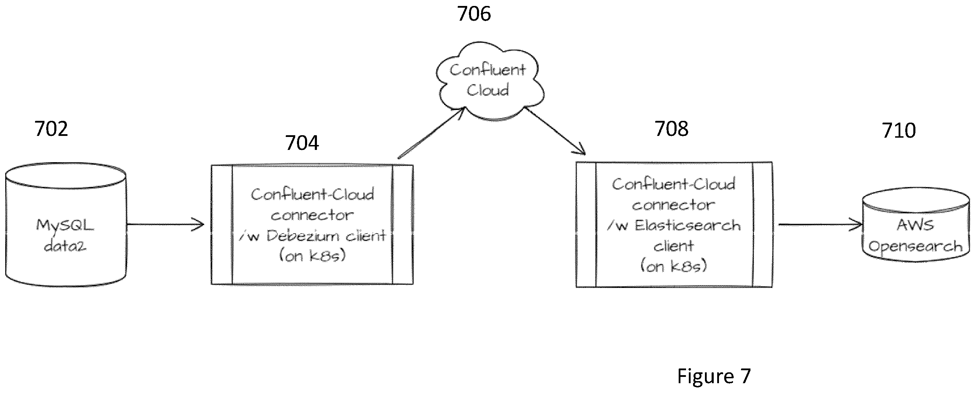

Figure 7 shows the steps for the elasticsearch. At 702 the database 218 is provided, containing all of the contact details. At 704 this is provided to a confluent cloud connector, which passes to the confluent cloud at 706. From the confluent cloud the search passes to confluent cloud with search client at 708, which then passes to AWS opensearch at 710.

The tests using the method of figure 7 revealed shortcomings in the tools and platforms. These needed to be addressed in order to be able to effectively transfer the findings to the data work flows.

Based on this, the development of data pipelines was taken forward with the following measures:
- The steps for continuous integration can be reduced by using the same runtime environment for development, testing, and production as well as by using images as immutable contexts.
- By using windowed streams instead of batches, greater elasticity was achieved instead of blocking sources for peak loads.
- A modern message broker such as Apache Kafka was used to manage the status of the data pipelines.

The application and method as described is not a simple computer program but rather a network of interdependent software components. The components run on different virtual and physical hardware and in several data centres. The configurations of the components are highly complex because they have to identify all possible problems. The number of users can be increased, as the numbers increase this will affect the following elements:
- simultaneous search queries of the users
- number of campaigns and the database queries they contain
- number of emails to be sent
- amount of text and links in the emails
- number of freely configurable fields

In order to send 1,000,000,000 emails in a single working day, a new server infrastructure was introduced. This divided the increasing load from the main server to any number of smaller server units with four to eight processors and became scalable in terms of infrastructure. During operation, there were no time delays in the transfer of data between the various server units. In some cases, there were delays of up to two hours in scheduled email delivery. With the newly developed concept of dynamic adjustment within the Worker system, processing was accelerated by 90.44%.

The solution is based on the following technologies:
- Drupal Cron
- Beanstalk queues
- RabbitMQ
- Datatog metrics
- Queue workers
- Kubernetes
- PHP programming
- Intelligent linking of logical relationships

The method of this embodiment is monitored by the permanent measurement of triggers. Every change of state within the system is such a trigger. These include:
- one day is given to contact
- one day is taken away from contact
- one or more pieces of contact information are entered, changed, or deleted
- a campaign is started or ended
- one or more tags, fields, if-then queries, or wait functions are executed within a campaign
- a smart link in an email is triggered
- an email, newsletter, SMS, or follow-up message is sent
- an email, newsletter, SMS, or follow-up message is delivered
- an email, newsletter, SMS, or follow-up message is opened
- an email, newsletter, SMS, or follow-up message is viewed in the browser
- and so on

The number of triggers to be processed by the system depends on the number of users, the active email campaigns, and the actions used in them. Email delivery is then only one of these different triggers and cannot be prioritised over the others. The processing time of all triggers occurring is crucial for the overall performance of the system and the basis for increasing the daily email delivery volume.

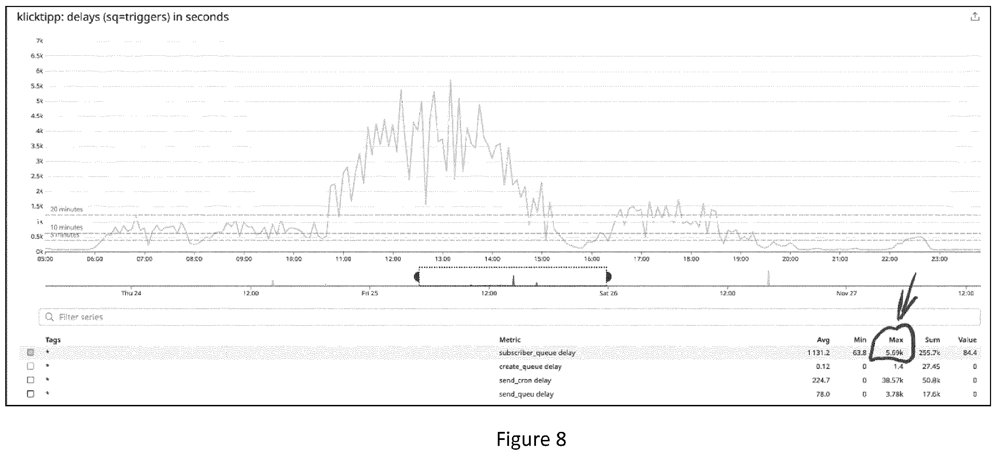

Figure 8 shows processing times for system trigger on 20 July 2021, as shown in this figure delays of up to 5,690 s = 94.83 minutes = 1.58 h were measured in July 2021.

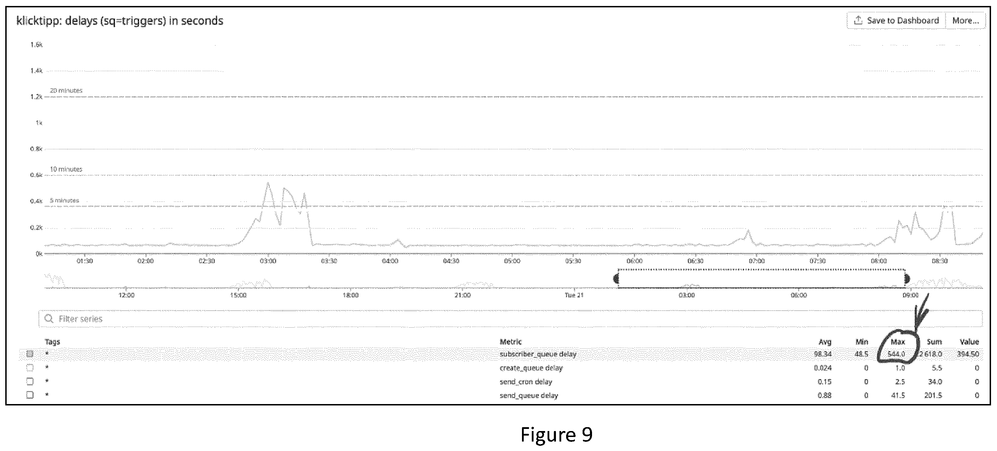

As a result of the measures implemented during the reporting period, the delay was reduced from 5,690 to a maximum of 544 s = 9.1 min = 0.15 h. Most of the time, the processing time was as low as 20 s. This is shown in figure 9, which shows processing times for system trigger on 30 June 2022
The delay time was thus reduced by 90.44%.

Possible ways to improve or exceed the benchmark. The following measures served as a starting point here:
Distribute the process load across several servers and thus avoid bottlenecks. By using load balancers, worker systems, and auto-scaling groups, resources can be automatically added or removed as needed.

Caching: By using caching, frequently requested data or queries can be stored in the memory in order to speed up access to them and reduce the load on the database or other back-end systems.

Database optimisation: The performance of cloud software often depends heavily on database performance. Optimising database queries, indexing, and server configuration can help improve response times.

Optimisation of network latency: Network latency can affect the performance of cloud software. Network latency can be reduced by selecting cloud regions closer to the location of the user or using Edge computing technologies.

Compression: Compressing data transferred between the server and the client can reduce transfer times and thus improve performance.

Optimisation of the code: Optimising the code can help remove bottlenecks in the system and thus improve performance. This includes using more efficient algorithms and avoiding loops or unnecessary queries.

The 20 campaigns that caused the greatest delay in overall performance were identified. These campaigns were transferred to an identical test system. The measures described above were implemented on this system. Based on the knowledge gained from this, a dynamic procedure for automatic resource optimisation was developed. The optimisation model developed then served as the basis for implementing the measures in the production system and the tests in cooperation with 25 power users and their real contact data.

The greatest effect was achieved with the dynamic adjustment of the required worker systems. It was thus possible to reduce the delay time by 90.44%.

Over six weeks, it was determined which campaigns occur with the greatest delay. The number of triggers included there was the cause of the biggest delays. The result of this was that most of these campaigns can get by with much fewer triggers through a new action "target". With the help of this new function, the campaign target can be reached directly at any time.

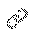 The email management method and system as described represents a significant advancement in the field of email communication management. By utilizing artificial intelligence to accurately merge multiple email addresses associated with a single user into one enriched profile, this invention solves a prevalent problem in email marketing and customer communication. This invention not only enhances the user experience by reducing email redundancy but also provides marketers with accurate data, leading to more effective communication strategies and improved engagement metrics.

The present invention has been described with reference to the accompanying drawings. However, it will be appreciated that the present invention is not limited to the specific examples herein described and as illustrated in the accompanying drawings. Furthermore, because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

The invention may be implemented in a computer program for running on a computer system, at least including code portions for performing steps of a method according to the invention when run on a programmable apparatus, such as a computer system or enabling a programmable apparatus to perform functions of a device or system according to the invention.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations are merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps than those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A computer implemented method for consolidating multiple electronic mail addresses for a user into a single user profile with a single preferred email address comprising the steps of:
∘ collecting contact data (202) comprising an email address for a user and additional user information data for the user and storing the collected data in a database (218);
∘ analyzing the collected contact data (202) and additional user information data to identify multiple different email addresses associated with a single user;
∘ merging the identified multiple email addresses associated with the single user into a separate unified contact record for the single user; and
∘ updating the single user profile within the database (218) to reflect the unified contact record;
wherein when new contact data and additional subject information data is added to the database, an automatic real time trigger is provided so that the new contact data and additional subject information data is analysed immediately after being added;
further comprising a scheduled trigger to periodically scan at least part of the database at a predefined interval to check duplicate detection and merging is consistently applied to all data in the database.

2. The method of claim 1, wherein analyzing the collected contact data (202) and additional user information data involves applying machine learning algorithms to determine a likelihood that multiple email addresses are associated with the same user based on patterns in the email contact data and the additional user information data.

3. The method of claim 1 or claim 2 wherein at least one of the collected contact data (202) and additional user information data are analysed using Machine Learning or Artificial Intelligence to identify different email addresses for the same user .

4. The method of claim 3 wherein the machine learning techniques comprise at least one of pattern recognition and matching, Natural language processing, Supervised learning, unsupervised learning, fuzzy matching, probabilistic learning, deterministic linking, behavioural analysis using deep learning.

5. The method of any preceding claim wherein the additional user information data comprises one of more of: subscription information (204), email and SMS information (206), publicly available data (208), social media data (210), data related to electronic transactions (212), data related to customer service interactions (214), response data including IP addresses and geolocation information (216).

6. The method of claim 5 wherein historical information, comprising one of more of location information and contextual information about a user is analysed to find similarities in the contact data for a user..

7. The method of claim 6 wherein the historical information is analysed using Natural Language Processing.

8. The method as claimed in any preceding claim wherein the contact data are stored in a SQL database (218) , and wherein the contact data also comprises at least one of postal address and mobile telephone number, also stored in the SQL database.

9. The method of claim 1 further comprising a user activated trigger, for a user to indicate that two or more email contacts may relate to the same subject and activate the analysis step.

10. The method of any preceding claim , wherein the merging step includes the verification of data accuracy and the removal of redundant information to create a high-fidelity user profile.

11. The method of claim 10 wherein the merging step identifies groups of contacts that are at least one of: duplicates or closely related, and creates a relational link between the members of the group in the database.

12. The method of claim 10 or claim 11 wherein the merging step creates the unified record information by attaching a unified contact ID to each contact that is associated with the single user; wherein the original contact information that created the unified contact are maintained separately from, and in addition to the unified contact information.

13. A system (100) for consolidating multiple electronic mail addresses for a user into a single user profile with a single preferred email address comprising:
a data collection module (102) for collecting contact data comprising an email address for a subject and additional subject information data for the subject and storing the collected data in a database;
an analysis module (104) for analyzing the collected contact data and additional subject information data using Machine Learning to identify multiple different email addresses associated with a single user;
a merging module (106) for Merging the identified multiple email addresses associated with the single user into a separate unified contact record for the single user;
and a user interface (108) for managing a deduplication process carried out by the above modules;
wherein when new contact data and additional subject information data is added to the database, an automatic real time trigger is provided so that the new contact data and additional subject information data is analysed immediately after being added;
further comprising a scheduled trigger to periodically scan at least part of the database at a predefined interval to check duplicate detection and merging is consistently applied to all data in the database.

## Patentansprüche

1. Computerimplementiertes Verfahren zum Konsolidieren mehrerer E-Mail-Adressen für einen Benutzer zu einem einzelnen Benutzerprofil mit einer einzelnen bevorzugten E-Mail-Adresse, die folgenden Schritte umfassend:
∘ Sammeln von Kontaktdaten (202), umfassend eine E-Mail-Adresse für einen Benutzer und zusätzliche Benutzerinformationsdaten für den Benutzer, und Speichern der gesammelten Daten in einer Datenbank (218);
∘ Analysieren der gesammelten Kontaktdaten (202) und zusätzlichen Benutzerinformationsdaten, um mehrere verschiedene E-Mail-Adressen zu identifizieren, die mit einem einzelnen Benutzer assoziiert sind;
∘ Zusammenführen der identifizierten mehreren E-Mail-Adressen, die mit dem einzelnen Benutzer assoziiert sind, zu einem separaten vereinheitlichten Kontaktdatensatz für den einzelnen Benutzer; und
∘Aktualisieren des einzelnen Benutzerprofils innerhalb der Datenbank (218), um den vereinheitlichten Kontaktdatensatz darzustellen;
wobei, wenn neue Kontaktdaten und zusätzliche Personeninformationsdaten zu der Datenbank hinzugefügt werden, ein automatischer Echtzeitauslöser bereitgestellt wird, sodass die neuen Kontaktdaten und die zusätzlichen Personeninformationsdaten unmittelbar nach der Hinzufügung analysiert werden;
ferner umfassend einen geplanten Auslöser, um regelmäßig mindestens einen Teil der Datenbank in einem vordefinierten Intervall zu durchsuchen, um zu prüfen, dass eine Detektion und Zusammenführung von Duplikaten konsistent auf alle Daten in der Datenbank angewendet werden.

2. Verfahren nach Anspruch 1, wobei das Analysieren der gesammelten Kontaktdaten (202) und der zusätzlichen Benutzerinformationsdaten Anwenden von Algorithmen für maschinelles Lernen umfasst, um basierend auf Mustern in den E-Mail-Kontaktdaten und den zusätzlichen Benutzerinformationsdaten eine Wahrscheinlichkeit zu bestimmen, dass mehrere E-Mail-Adressen mit dem gleichen Benutzer assoziiert sind.

3. Verfahren nach Anspruch 1 oder Anspruch 2, wobei mindestens eines von den gesammelten Kontaktdaten (202) und den zusätzlichen Benutzerinformationsdaten unter Verwendung von maschinellem Lernen oder künstlicher Intelligenz analysiert werden, um verschiedene E-Mail-Adressen für den gleichen Benutzer zu identifizieren.

4. Verfahren nach Anspruch 3, wobei die Techniken für maschinelles Lernen mindestens eines von Mustererkennung und -vergleich, Verarbeitung natürlicher Sprache, überwachtem Lernen, unüberwachtem Lernen, Fuzzy-Matching, probabilistischem Lernen, deterministischem Verknüpfen, Verhaltensanalyse unter Verwendung von Deep Learning umfassen.

5. Verfahren nach einem der vorhergehenden Ansprüche, wobei die zusätzlichen Benutzerinformationsdaten eines oder mehrere von Folgendem umfassen: Abonnementinformationen (204), E-Mail- und SMS-Informationen (206), öffentlich verfügbaren Daten (208), Social-Media-Daten (210), Daten in Bezug auf elektronische Transaktionen (212), Daten in Bezug auf Kundendienst-Interaktionen (214), Antwortdaten, einschließlich IP-Adressen und Geolokalisierungsinformationen (216).

6. Verfahren nach Anspruch 5, wobei historische Informationen, die eine oder mehrere von Positionsinformationen und Kontextinformationen über einen Benutzer umfassen, analysiert werden, um Ähnlichkeiten in den Kontaktdaten für einen Benutzer zu finden.

7. Verfahren nach Anspruch 6, wobei die historischen Informationen unter Verwendung von Verarbeitung natürlicher Sprache analysiert werden.

8. Verfahren nach einem der vorhergehenden Ansprüche, wobei die Kontaktdaten in einer SQL-Datenbank (218) gespeichert werden und wobei die Kontaktdaten außerdem mindestens eines von einer Postadresse und einer Mobiltelefonnummer, die ebenfalls in der SQL-Datenbank gespeichert sind, umfassen.

9. Verfahren nach Anspruch 1, ferner umfassend einen durch den Benutzer aktivieren Auslöser für einen Benutzer, um anzugeben, dass sich zwei oder mehr E-Mail-Kontakte auf die gleiche Person beziehen können, und den Analyseschritt zu aktivieren.

10. Verfahren nach einem der vorhergehenden Ansprüche, wobei der Zusammenführungsschritt die Verifizierung der Datengenauigkeit und die Entfernung von redundanten Informationen beinhaltet, um ein Benutzerprofil mit hoher Genauigkeit zu erzeugen.

11. Verfahren nach Anspruch 10, wobei der Zusammenführungsschritt Gruppen von Kontakten identifiziert, die mindestens eines von Folgendem sind: Duplikate oder eng miteinander verbunden, und eine relationale Verknüpfung zwischen den Elementen der Gruppe in der Datenbank erzeugt.

12. Verfahren nach Anspruch 10 oder Anspruch 11, wobei der Zusammenführungsschritt die vereinheitlichten Datensatzinformationen durch Anhängen einer vereinheitlichten Kontakt-ID an jeden Kontakt, die mit dem einzelnen Benutzer assoziiert ist, erzeugt; wobei die Originalkontaktinformationen, die den vereinheitlichten Kontakt erzeugt haben, getrennt von oder zusätzlich zu den vereinheitlichten Kontaktinformationen gepflegt werden.

13. System (100) zum Konsolidieren mehrerer E-Mail-Adressen für einen Benutzer zu einem einzelnen Benutzerprofil mit einer einzelnen bevorzugten E-Mail-Adresse, umfassend:
ein Datensammelmodul (102) zum Sammeln von Kontaktdaten, umfassend eine E-Mail-Adresse für eine Person und zusätzliche Personeninformationsdaten für die Person, und Speichern der gesammelten Daten in einer Datenbank;
ein Analysemodul (104) zum Analysieren der gesammelten Kontaktdaten und zusätzlichen Personeninformationsdaten unter Verwendung von maschinellem Lernen, um mehrere verschiedene E-Mail-Adressen zu identifizieren, die mit einem einzelnen Benutzer assoziiert sind;
ein Zusammenführungsmodul (106) zum Zusammenführen der identifizierten mehreren E-Mail-Adressen, die mit dem einzelnen Benutzer assoziiert sind, zu einem separaten vereinheitlichten Kontaktdatensatz für den einzelnen Benutzer;
und eine Benutzeroberfläche (108) zum Verwalten eines Deduplikationsprozesses, der von den vorstehenden Modulen ausgeführt wird;
wobei, wenn neue Kontaktdaten und zusätzliche Personeninformationsdaten zu der Datenbank hinzugefügt werden, ein automatischer Echtzeitauslöser bereitgestellt wird, sodass die neuen Kontaktdaten und die zusätzlichen Personeninformationsdaten unmittelbar nach der Hinzufügung analysiert werden;
ferner umfassend einen geplanten Auslöser, um regelmäßig mindestens einen Teil der Datenbank in einem vordefinierten Intervall zu durchsuchen, um zu prüfen, dass eine Detektion und Zusammenführung von Duplikaten konsistent auf alle Daten in der Datenbank angewendet werden.

## Revendications

1. Procédé mis en œuvre par ordinateur pour consolider des adresses de courrier électronique multiples pour un utilisateur en un profil d'utilisateur unique avec une adresse de courrier électronique préférée unique, comprenant les étapes consistant à :
∘ collecter des données de contact (202) comprenant une adresse de courrier électronique pour un utilisateur et des données d'informations d'utilisateur supplémentaires pour l'utilisateur et stocker les données collectées dans une base de données (218) ;
∘ analyser les données de contact (202) collectées et les données d'informations d'utilisateur supplémentaires pour identifier des adresses de courrier électronique différentes multiples associées à un utilisateur unique ;
∘ fusionner les adresses de courrier électronique multiples identifiées associées à l'utilisateur unique en un enregistrement de contact unifié distinct pour l'utilisateur unique ; et
∘ mettre à jour le profil d'utilisateur unique au sein de la base de données (218) pour refléter l'enregistrement de contact unifié ;
dans lequel, lorsque de nouvelles données de contact et de nouvelles données d'informations de sujet supplémentaires sont ajoutées à la base de données, un déclencheur automatique en temps réel est fourni de sorte que les nouvelles données de contact et les données d'informations de sujet supplémentaires soient analysées immédiatement après avoir été ajoutées ;
comprenant en outre un déclencheur programmé pour balayer périodiquement au moins une partie de la base de données à un intervalle prédéfini afin de vérifier que la détection de doublons et la fusion sont appliquées de manière cohérente à toutes les données dans la base de données.

2. Procédé selon la revendication 1, dans lequel l'analyse des données de contact (202) collectées et des données d'informations d'utilisateur supplémentaires implique l'application d'algorithmes d'apprentissage automatique pour déterminer une probabilité que des adresses de courrier électronique multiples soient associées au même utilisateur sur la base de modèles dans les données de contact de courrier électronique et les données d'informations d'utilisateur supplémentaires.

3. Procédé selon la revendication 1 ou la revendication 2, dans lequel au moins l'une des données de contact (202) collectées et des données d'informations d'utilisateur supplémentaires est analysée en utilisant l'apprentissage automatique ou l'intelligence artificielle pour identifier des adresses de courrier électronique différentes pour le même utilisateur.

4. Procédé selon la revendication 3, dans lequel les techniques d'apprentissage automatique comprennent au moins l'un parmi la reconnaissance et la mise en correspondance de motifs, le traitement du langage naturel, l'apprentissage supervisé, l'apprentissage non supervisé, la mise en correspondance floue, l'apprentissage probabiliste, la liaison déterministe, l'analyse comportementale utilisant l'apprentissage profond.

5. Procédé selon l'une quelconque des revendications précédentes, dans lequel les données d'informations d'utilisateur supplémentaires comprennent une ou plusieurs parmi : des informations d'abonnement (204), des informations de courrier électronique et de SMS (206), des données publiquement disponibles (208), des données de médias sociaux (210), des données liées à des transactions électroniques (212), des données liées à des interactions de service client (214), des données de réponse incluant des adresses IP et des informations de géolocalisation (216).

6. Procédé selon la revendication 5, dans lequel un historique d'informations, comprenant une ou plusieurs parmi des informations de localisation et des informations contextuelles concernant un utilisateur, est analysé pour trouver des similitudes dans les données de contact pour un utilisateur.

7. Procédé selon la revendication 6, dans lequel l'historique d'informations est analysé en utilisant le traitement du langage naturel.

8. Procédé selon l'une quelconque des revendications précédentes, dans lequel les données de contact sont stockées dans une base de données SQL (218), et dans lequel les données de contact comprennent également au moins l'un parmi une adresse postale et un numéro de téléphone mobile, également stockés dans la base de données SQL.

9. Procédé selon la revendication 1, comprenant en outre un déclencheur activé par l'utilisateur, pour qu'un utilisateur indique que deux contacts de courrier électronique ou plus peuvent se rapporter au même sujet et consistant à réaliser l'étape d'analyse.

10. Procédé selon l'une quelconque des revendications précédentes, dans lequel l'étape de fusion inclut la vérification de l'exactitude des données et la suppression d'informations redondantes pour créer un profil d'utilisateur à haute fidélité.

11. Procédé selon la revendication 10, dans lequel l'étape de fusion identifie des groupes de contacts qui sont au moins l'un parmi : des doublons ou étroitement liés, et crée un lien relationnel entre les membres du groupe dans la base de données.

12. Procédé selon la revendication 10 ou la revendication 11, dans lequel l'étape de fusion crée les informations d'enregistrement unifié en attachant un identifiant de contact unifié à chaque contact qui est associé à l'utilisateur unique ; dans lequel les informations de contact d'origine qui ont créé le contact unifié sont maintenues de façon distincte par rapport aux informations de contact unifié, et en plus de celles-ci.

13. Système (100) pour consolider des adresses de courrier électronique multiples pour un utilisateur en un profil d'utilisateur unique avec une adresse de courrier électronique préférée unique, comprenant :
un module de collecte de données (102) pour collecter des données de contact comprenant une adresse de courrier électronique pour un sujet et des données d'informations de sujet supplémentaires pour le sujet et stocker les données collectées dans une base de données ;
un module d'analyse (104) pour analyser les données de contact collectées et les données d'informations de sujet supplémentaires en utilisant l'apprentissage automatique pour identifier des adresses de courrier électronique différentes multiples associées à un utilisateur unique ;
un module de fusion (106) pour fusionner les adresses de courrier électronique multiples identifiées associées à l'utilisateur unique en un enregistrement de contact unifié distinct pour l'utilisateur unique ;
et une interface utilisateur (108) pour gérer un processus de déduplication réalisé par les modules cidessus ;
dans lequel, lorsque de nouvelles données de contact et de nouvelles données d'informations de sujet supplémentaires sont ajoutées à la base de données, un déclencheur automatique en temps réel est fourni de sorte que les nouvelles données de contact et les données d'informations de sujet supplémentaires soient analysées immédiatement après avoir été ajoutées ;
comprenant en outre un déclencheur programmé pour balayer périodiquement au moins une partie de la base de données à un intervalle prédéfini afin de vérifier que la détection de doublons et la fusion sont appliquées de manière cohérente à toutes les données dans la base de données.
